# FASCICULE DE BREVET EUROPEEN

(11) **EP 2 477 949 B1**
(45) Date de publication et mention de la délivrance du brevet: **09.09.2015**
(21) Numéro de dépôt: 10763444.6
(22) Date de dépôt: 17.09.2010
(51) Int. Cl.: C02F 1/34, C02F 3/12, C02F 1/00, C02F 1/48, C02F 1/52

(54) **STATION D'ÉPURATION À BOUE ACTIVÉE ET PROCÉDÉ POUR DÉTRUIRE LES BACTÉRIES FILAMENTEUSES**
AUFBEREITUNGSANLAGE MIT AKTIVSCHLAMM UND VERFAHREN ZUR ZERSTÖRUNG VON FADENFÖRMIGEN BAKTERIEN
ACTIVATED SLUDGE TREATMENT PLANT AND METHOD TO DESTRUCT FILAMENTOUS BACTERIA

(30) Priorité: 17.09.2009 FR 0956391
(43) Date de publication de la demande: 25.07.2012
(73) Titulaire: ISB Water, 75010 Paris (FR)
(72) Inventeur: PROFIT, Grégoire, 75014 Paris (FR); PROFIT, Alexandre, 92190 Meudon (FR)
(74) Mandataire: Nony
(86) Numéro de dépôt international: PCT/IB2010/054204
(87) Numéro de publication internationale: WO 2011/033476

(56) Documents cités:
- EP-A1- 0 680 457
- FR-A1- 2 430 451
- US-A1- 2004 256 314
- US-B1- 6 402 065
- US-B2- 7 022 238

## Description

### Domaine technique

L'invention se rapporte à une station d'épuration à boue activée et à un procédé de destruction de bactéries filamenteuses pouvant être mis en oeuvre dans une telle station d'épuration.

### Art antérieur

Une présence excessive de bactéries filamenteuses dans les boues activées d'une station d'épuration peut conduire à un foisonnement et/ou à un moussage de cette boue. Le foisonnement, en anglais « bulking », est un phénomène conduisant à une augmentation du volume de la boue activée. Il conduit à une remontée du voile de boue dans les bassins de décantation, nuisibles à l'efficacité de ces derniers. Le foisonnement peut même conduire au débordement de la boue.

Le moussage, en anglais « foaming », se traduit par le développement à la surface des bassins d'amas de flottants stables, bruns, visqueux et épais. Ces amas sont défavorables au transfert d'oxygène vers la boue et nuisent, parfois considérablement, à l'efficacité du fonctionnement de la station d'épuration.

Pour éviter le foisonnement et le moussage, il est possible d'ajouter dans la boue une substance présentant une masse volumique élevée, généralement minérale, qui en s'associant au floc bactérien améliore sa décantation. Cette technique est appelée « lestage ». Il est également possible d'ajouter un coagulant-floculant favorisant l'agrégation des petits flocs et améliorant ainsi la vitesse de sédimentation. Enfin, il est possible d'ajouter des agents oxydants puissants.

Toutes ces solutions impliquent souvent un arrêt de l'exploitation, la mise en oeuvre d'équipements spécifiques et l'achat de consommables. En outre, elles conduisent à une augmentation du volume de la boue, impliquant un surdimensionnement des installations. De plus, l'ajout de ces consommables dans la boue activée peut réduire la quantité de nutriments disponibles pour les bactéries, voire être toxique. Il peut donc conduire à une destruction de bactéries utiles, et notamment de bactéries nitrifiantes.

Il existe donc un besoin pour une solution permettant de réduire, voire supprimer, les risques de foisonnement ou de moussage de la boue activée en évitant, au moins partiellement, les problèmes mentionnés ci-dessus. Un but de l'invention est de répondre à ce besoin.

Le document US6402065 B1 divulgue une méthode et un appareil correspondant pour supprimer le foisonnement d'une boue activée lié à la production excessive de bactéries filamenteuses. Ce document utilise le principe de la cavitation pour désintégrer les cellules microbiennes passant à travers les ouvertures d'un rotor.

### Résumé de l'invention

L'invention propose une station d'épuration selon la revendication 1 comportant un circuit de traitement pourvu d'un réacteur dans lequel de la boue activée traverse une pluralité de premiers canaux délimités par une paroi intérieure en un matériau diélectrique et au moins une chambre de détente, en aval desdits premiers canaux, le circuit de traitement étant configuré pour générer de la cavitation dans la chambre de détente.

L'inventeur a découvert que le passage de la boue activée dans le réacteur conduit à une dissociation des flocs et à une destruction, au moins partielle, des bactéries filamenteuses. En outre, avantageusement, les bactéries non filamenteuses ne sont pas, ou peu, affectées par la traversée du réacteur. Sans être limité par cette théorie, l'inventeur explique ces performances par les forces de cisaillement générées dans la chambre de détente, agissant à la manière d'un hachoir sur les bactéries filamenteuses.

Par ailleurs, le frottement de la boue sur le matériau diélectrique génère un champ électrostatique dans les premiers canaux, favorisant la coagulation, la floculation, et donc la décantation. Avantageusement, l'invention permet ainsi de limiter significativement, voire de se supprimer l'injection de floculant.

Enfin, la fabrication d'un circuit de traitement pourvu d'un réacteur n'implique avantageusement pas de modifications substantielles de la station d'épuration.

Le matériau diélectrique est de préférence un plastique, par exemple du polytétrafluoroéthylène (PTFE), du nylon, du polypropylène, du polychlorure de vinyle (PVC) ou un mélange de ces matériaux. D'autres matériaux diélectriques, par exemple céramiques, peuvent également être utilisés dans la mesure où ils permettent, par la circulation de la boue, de générer une charge électrique statique.

Le PTFE est le matériau diélectrique préféré. Ce matériau diélectrique évite en effet à la matière solide de la boue d'adhérer à la surface des premiers canaux. Avantageusement, le risque de colmatage en est réduit.

Les premiers canaux sont de préférence parallèles les uns aux autres. Ils peuvent être rectilignes ou non. En particulier, ils peuvent s'étendre suivant l'axe longitudinal du réacteur. Le nombre de premiers canaux est de préférence supérieur à 3, supérieur à 5, supérieur à 10, supérieur à 20, supérieur à 30 et/ou inférieur à 200, inférieur à 150, inférieur à 100, inférieur à 80, inférieur à 60. La section transversale des canaux peut être quelconque, par exemple circulaire. Dans un mode de réalisation, les premiers canaux présentent une section transversale sensiblement constante sur toute leur longueur.

Le diamètre intérieur équivalent des premiers canaux est de préférence supérieur à 2 mm, supérieur à 10 mm, voire supérieur à 15 mm ou supérieur à 20 mm et/ou inférieur à 50 mm, inférieur à 40 mm, inférieur à 35 mm. Un diamètre intérieur équivalent d'environ 30 mm est bien adapté.

La longueur des premiers canaux est de préférence supérieure à 20 mm, supérieure à 30 mm et/ou inférieure à 50 mm, inférieure à 40 mm.

De préférence, la chambre de détente présente un volume supérieur à 0,0001 dm³, supérieur à 0,001 dm³, supérieur 0,01 dm³, supérieur à 0,1 dm³ et/ou inférieur à 20 dm³, inférieur à 10 dm³, inférieur à 1 dm³.

La chambre de détente est en aval des premiers canaux. Les premiers canaux débouchent donc vers l'aval dans la chambre de détente.

On appelle « canaux d'alimentation en boue » les canaux débouchant dans la chambre de détente pour l'alimenter en boue.

Le rapport S / ∑ peut être supérieur à 2, supérieur à 5, supérieur à 10, supérieur à 20, supérieur à 50, supérieur à 100, voire supérieur à 200 et/ou inférieur à 1000, inférieur à 500, inférieur à 400, voire inférieur à 300,
- S désignant la section de la chambre de détente mesurée dans un plan transversal immédiatement en aval de la région dans laquelle les canaux d'alimentation en boue débouchent dans la chambre de détente ;
- Σ désignant la somme des sections transversales desdits canaux d'alimentation mesurées dans un plan transversal immédiatement en amont de la région dans laquelle ils débouchent dans la chambre de détente.

Un rapport de S/∑ élevé permet avantageusement la création de micro-jets à l'embouchure des canaux d'alimentation en boue, très efficaces pour l'élimination des bactéries filamenteuses.

Toutes les chambres de détente du réacteur peuvent présenter un rapport S/∑ sensiblement identique.

De préférence, le réacteur comporte au moins une chambre de cisaillement en aval de laquelle la vitesse de la boue activée augmente par pénétration dans des canaux d'évacuation.
S' désignant la section de la chambre de cisaillement mesurée dans un plan transversal immédiatement en amont de la région dans laquelle les canaux d'évacuation débouchent dans ladite chambre de cisaillement, et
∑' désignant la somme des sections transversales des canaux d'évacuation mesurées dans un plan transversal immédiatement en aval de la région dans laquelle ils débouchent dans la chambre de cisaillement,
le rapport S'/∑' est de préférence supérieur à 2, voire supérieur à 5, supérieur à 10, supérieur à 20, supérieur à 50, supérieur à 100, voire supérieur à 200 et/ou inférieur à 1000, inférieur à 500, inférieur à 400, voire inférieur à 300.

Ainsi, la pénétration de la boue activée dans les canaux d'évacuation conduit à une accélération brutale de sa vitesse qui favorise le cisaillement. En particulier, les bactéries filamenteuses peuvent être coupées par projection sur les bords des ouvertures amont des canaux d'évacuation.

Les canaux d'évacuation peuvent en particulier être des premiers canaux ou des deuxièmes canaux tels que décrits ci-après.

Toutes les chambres de cisaillement du réacteur peuvent présenter un rapport S'/∑' sensiblement identique.

Dans un mode de réalisation, au moins une partie, de préférence tous les premiers et/ou deuxièmes canaux débouchent, vers l'amont, dans une chambre de cisaillement et vers l'aval, dans une chambre de détente.

De préférence encore, le réacteur comporte une électrode sacrificielle en un matériau conducteur électriquement, de préférence en zinc. L'électrode sacrificielle peut en particulier comporter une pluralité de deuxièmes canaux délimités par une paroi intérieure en ledit matériau conducteur électriquement. Dans un mode de réalisation, la chambre de détente est disposée, le long du trajet de la boue activée, entre les premiers canaux et les deuxièmes canaux, ou réciproquement, entre les deuxièmes canaux et les premiers canaux.

Les deuxièmes canaux peuvent être parallèles les uns aux autres. Ils peuvent être rectilignes ou non. En particulier, ils peuvent s'étendre suivant l'axe longitudinal du réacteur. Le nombre de deuxièmes canaux est de préférence supérieur à 2, supérieur à 3, supérieur à 5, supérieur à 10, supérieur à 20, supérieur à 30 et/ou inférieur à 100, inférieur à 80, inférieur à 60. La section transversale des deuxièmes canaux peut être quelconque, par exemple circulaire. Dans un mode de réalisation, les deuxièmes canaux présentent une section transversale sensiblement constante sur toute leur longueur.

Le diamètre intérieur équivalent des deuxièmes canaux est de préférence supérieur à 2 mm, supérieur à 4 mm, voire supérieur à 5 mm et/ou inférieur à 15 mm, inférieur à 13 mm, inférieur à 10 mm, inférieur à 8 mm, voire inférieur à 7 mm.

Dans un mode de réalisation, le diamètre intérieur équivalent des deuxièmes canaux est supérieur, voire 1,1, 1,5, 2, ou 3 fois supérieur à celui des premiers canaux.

La longueur des deuxièmes canaux est de préférence supérieure à 20 mm, supérieure à 30 mm et/ou inférieure à 50 mm, inférieure à 40 mm.

La chambre de détente est de préférence commune à plusieurs deuxièmes canaux, voire commune à l'ensemble des deuxièmes canaux.

De préférence, les premiers canaux ne débouchent pas en regard des deuxièmes canaux, ce qui interdit à la boue sortant d'un premier canal d'entrer dans un deuxième canal, ou le contraire, en suivant un chemin rectiligne parallèle à l'axe du réacteur.

Dans un mode de réalisation, une même chambre peut à la fois servir de chambre de détente, par exemple avec des premiers canaux débouchant en amont de ladite chambre, et servir de chambre de cisaillement, par exemple avec des deuxièmes canaux débouchant en aval de ladite chambre.

Pour calculer le rapport S/∑ ou le rapport S'/∑ on prend en considération tous les canaux d'alimentation en boue ou tous les canaux d'évacuation concernés, respectivement.

Dans un mode de réalisation, le réacteur comporte un boîtier comportant une entrée et une sortie, un premier bloc définissant une pluralité de premiers canaux délimités latéralement, au moins partiellement, par une paroi en un matériau diélectrique, et une chambre de détente, lesdits premiers canaux étant agencés de manière que la boue traverse le réacteur depuis l'entrée jusqu'à la sortie en traversant au moins un premier canal et une chambre de détente. De préférence, les premiers canaux débouchent, du côté de la sortie, dans ladite chambre de détente.

Le boitier peut être en un matériau conducteur électriquement.

Le premier bloc peut en particulier être constitué en ledit matériau diélectrique.

Le réacteur peut encore comporter un deuxième bloc définissant une pluralité de deuxièmes canaux délimités latéralement, au moins partiellement, par une paroi en un matériau conducteur électriquement. Le deuxième bloc peut en particulier être constitué en ledit matériau conducteur électriquement. Le deuxième bloc peut être disposé en amont ou en aval du premier bloc, pourvu que soit ménagée une chambre de détente à l'intérieur dudit boîtier. La chambre de détente peut en particulier être disposée entre les premier et deuxième blocs ou en aval du bloc le plus en aval dans le boîtier. Dans le mode de réalisation préféré, les premier et deuxième blocs sont agencés de manière que la boue traverse successivement les premiers canaux, une chambre de détente dans laquelle débouchent tous les premiers et deuxièmes canaux, puis les deuxièmes canaux.

Les premiers et deuxièmes canaux des premier et deuxième blocs peuvent présenter une ou plusieurs des caractéristiques optionnelles des premiers et deuxièmes canaux décrits ci-dessus de manière générale. Les matériaux diélectrique et conducteur électriquement peuvent être également choisis parmi les matériaux cités ci-dessus.

Le nombre de premiers et/ou deuxièmes blocs est de préférence supérieur à 1, supérieur à 2 ou supérieur à 3 et/ou inférieur à 10, inférieur à 7 ou inférieur à 5.

Dans un mode de réalisation, le réacteur comporte successivement, depuis l'amont vers l'aval, une chambre de cisaillement, un premier bloc, une chambre de détente, un deuxième bloc (la chambre de détente précédente servant de chambre de cisaillement pour ce deuxième bloc), une chambre de détente, un premier bloc (la chambre de détente précédente servant de chambre de cisaillement pour ce premier bloc), une chambre de détente, un deuxième bloc (la chambre de détente précédente servant de chambre de cisaillement pour ce deuxième bloc), une chambre de détente, un premier bloc (la chambre de détente précédente servant de chambre de cisaillement pour ce premier bloc) et une chambre de détente.

Le réacteur peut être par exemple un des dispositifs décrits dans le brevet EP-B2-680 457, et notamment le dispositif commercialisé sous la dénomination IONSCALE BUSTER^{®} (ISB) par la société ISB WATER.

Le circuit de traitement peut être un circuit connectant un bassin de décantation et un bassin de boue activée, la boue issue du bassin de décantation étant traitée dans le réacteur, puis injectée dans le bassin de boue activée.

Le circuit de traitement peut être une boucle de recirculation permettant une extraction de boue dans un bassin de boue activée, un traitement dans le réacteur, puis une réinjection de la boue traitée dans ledit bassin.

Le circuit de traitement peut comprendre une pompe disposée de manière à générer, lors de son fonctionnement, un écoulement de boue activée à travers le réacteur, et un dispositif de commande apte à modifier le fonctionnement de ladite pompe. Le circuit de traitement peut aussi comporter, un clapet anti-retour évitant une circulation inverse dans la pompe en cas d'arrêt de celle-ci.

La pompe peut être commandée en « tout ou rien » par le dispositif de commande, par exemple par la fermeture ou l'ouverture d'un contact sec ou au moyen d'un relais à semi-conducteur. En variante, elle peut être commandée « à vitesse variable », avec au moins deux valeurs de vitesse non nulles. Dans un mode de réalisation, le circuit de traitement ne comporte pas d'autres consommateurs d'énergie que ladite pompe.

La loi de commande mise en oeuvre par le dispositif de commande peut notamment tenir compte du niveau d'aération de la boue et/ou de sa température et/ou de la quantité de la boue à traiter. Le circuit de traitement est configuré pour générer de la cavitation dans la chambre de détente. Le livre "CAVITATION AND BUBBLE DYNAMICS" de Christopher Earls Brennen aux éditions Oxoford University Press, 1995 décrit les conditions permettant d'obtenir de la cavitation.

Dans une boucle de recirculation, la pompe est de préférence commandée de manière à fonctionner par intermittence. Avantageusement, ce fonctionnement évite une destruction excessive des bactéries non filamenteuses. La pompe peut en particulier fonctionner moins de 30 % du temps.

De préférence, la pompe fonctionne par périodes d'une durée supérieure à 1 heure et/ou inférieure à 10 heures, inférieure à 8 heures, inférieure à 5 heures, inférieure à 3 heures. La durée d'une période d'arrêt entre deux périodes de fonctionnement est de préférence supérieure à 8 heures et/ou inférieure à 12 heures.

La fréquence des périodes de fonctionnement peut être supérieure à 2, supérieure à 4, supérieure à 6, voire supérieure à 8 périodes de fonctionnement par jour.

Un fonctionnement plus fréquent, voire permanent, est cependant possible, notamment pour limiter la consommation de coagulant/floculant.

Dans un mode de réalisation, le dispositif de commande est programmé pour, dans un mode dit « de rétro-lavage », pouvoir inverser le sens de l'écoulement dans le réacteur afin de le nettoyer avec un liquide non chargé, par exemple de l'eau.

Un câble équipotentiel peut être prévu entre l'entrée et la sortie du réacteur afin d'assurer l'équilibre électrique entre celles-ci.

L'invention concerne aussi un procédé selon la revendication 10 de destruction de bactéries filamenteuses contenues dans un liquide, en particulier dans une boue activée d'une station d'épuration, consistant à faire passer ledit liquide à travers un réacteur tel que décrit ci-dessus.

### Définitions

Un filament bactérien est une colonie de cellules qui, après division cellulaire, ne se séparent pas. Cette colonie croît selon un axe unique, formant ainsi un filament. Les bactéries capables de former un tel filament bactérien sont qualifiées de « filamenteuses ». Ces bactéries incluent notamment les micro-organismes suivants :
- *Beggiatoa sp.,*
- *Haliscomenobacter hydrossis,*
- *Microthrix parvicella,*
- *Nocardioformen dont Gordonia amara,*
- *Nostocoïla limicola I,*
- *Nostocoïla limicola II,*
- *Nostocoïla limicola III,*
- *Saprospira sp.,*
- *Sphaerotilus natans,*
- *Thiothrix I,*
- *Triothrix II,*
- *Type 0041,*
- *Type 0092,*
- *Type 021N,*
- *Type 0581,*
- *Type 0675,*
- *Type 0803,*
- *Type 0914,*
- *Type 0961,*
- *Type 1701,*
- *Type 1851,*
- *Type 1863,*
- *Type 0411.*

Une description détaillée des bactéries filamenteuses et des problèmes qu'elles engendrent dans les stations d'épuration est fournie dans le document technique du Ministère de l'Agriculture et de la Pêche, FNDAE n° 33, intitulé *«Dysfonctionnements biologiques des stations d'épuration: origines et solutions»* produit par le groupe de travail GIS-BIOSTEP. Ce document est disponible sous forme numérique sur le site http://www.eau.fndae.fr.

Une boue activée est une boue issue d'un procédé d'épuration biologique des eaux usées. A cet effet, les eaux usées sont mises en contact avec un mélange riche en bactéries afin de dégrader la matière organique en suspension ou dissoute. Pour augmenter l'activité des bactéries, les eaux usées sont aérées dans un bassin d'aération ou bassin « de boue activée », dans lequel, classiquement, de l'air est injecté. La boue activée est ensuite envoyée dans un bassin de décantation ou « clarificateur ». Une partie de la boue décantée dans le bassin de décantation est alors renvoyée vers le bassin de boue activée.

Les positions « amont » et « aval » sont déterminées par rapport au sens d'écoulement de la boue lors de son traitement dans le réacteur.

Par « comportant un », il y a lieu de comprendre « comportant au moins un », sauf indication contraire.

On appelle « diamètre équivalent » d'une section d'aire A le diamètre d'une section circulaire d'aire identique A. Pour une section circulaire, le diamètre équivalent est donc égal au diamètre.

On appelle « plan transversal » un plan perpendiculaire à l'axe du réacteur.

### Brève description des figures

D'autres caractéristiques et avantages de l'invention apparaîtront encore à la lecture de la description qui va suivre et à l'examen du dessin annexé dans lequel :
- la figure 1 représente en coupe longitudinale un exemple de réacteur pouvant être utilisé selon l'invention ;
- les figures 2 et 3 représentent schématiquement, partiellement, deux stations d'épuration selon l'invention.

Dans les différentes figures, des organes identiques ou analogues ont été repérés avec les mêmes références.

### Description détaillée d'un mode de réalisation

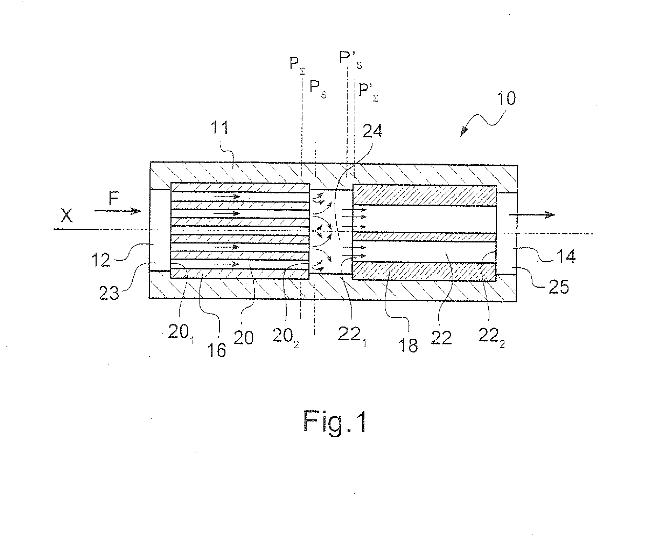

La figure 1 représente un réacteur 10 du type de ceux décrits dans le brevet EP 680 457.

Le réacteur 10, d'axe longitudinal X, comporte un boîtier 11 pourvu d'une entrée 12 et d'une sortie 14.

Le boîtier 11 contient successivement, depuis l'aval vers l'amont, un premier bloc 16 en un matériau diélectrique et un deuxième bloc 18 en un matériau conducteur électriquement. De préférence, le boîtier 11 est en un matériau conducteur électriquement et est connecté électriquement avec l'anode sacrificielle qui constitue le deuxième bloc 18.

Les premier et deuxième blocs sont percés longitudinalement de premiers et deuxièmes canaux, référencés 20 et 22, respectivement.

Les premiers canaux débouchent en amont, vers l'entrée 12, dans une première chambre de cisaillement 23, par des ouvertures « amont » 20₁ et en aval, dans une première chambre de détente 24 cylindrique, par des ouvertures « aval » 20₂.

Les deuxièmes canaux 22 débouchent en amont vers la première chambre de détente 24, agissant comme une deuxième chambre de cisaillement, par des ouvertures « amont » 22₁, et vers l'aval, vers la sortie 14, dans une deuxième chambre de détente 25 par des ouvertures « aval » 22₂.

Le diamètre de la première chambre de détente 24 est de 270 mm. Tous les premiers canaux, au nombre de 9, présentent un diamètre intérieur de 6,3 mm.

Le rapport S / ∑ est donc d'environ 200,
- S désignant la section de la première chambre de détente 24 mesurée dans un plan transversal Pₛ immédiatement en aval des ouvertures « aval » 20₂ des premiers canaux (agissant comme des canaux d'alimentation en boue de la chambre de détente) ;
- ∑ désignant la somme des sections transversales desdits premiers canaux mesurées dans un plan transversal P_{∑} immédiatement en amont de ces ouvertures « aval ».

La deuxième chambre de détente 25 et les ouvertures aval 22₂ des deuxièmes canaux peuvent présenter une configuration similaire, voire identique, à celle de la chambre de détente 24 et des ouvertures aval 20₂ des premiers canaux décrite ci-dessus.

La première chambre de détente 24 étant cylindrique, S'=S.

Par ailleurs, tous les deuxièmes canaux, au nombre de 3, présentent un diamètre intérieur de 9 mm.

Le rapport S' / ∑' est donc d'environ 300,
- S' désignant la section de la première chambre de détente 24 mesurée dans un plan transversal Pₛ' immédiatement en amont des ouvertures « amont » 22₁ des deuxièmes canaux (agissant comme des canaux d'évacuation de la chambre de détente) ;
- ∑' désignant la somme des sections transversales desdits deuxièmes canaux mesurées dans un plan transversal P_{∑}' immédiatement en aval de ces ouvertures « amont ».

La première chambre de cisaillement 23 et les ouvertures amont 20₁ des premiers canaux peuvent présenter une configuration similaire, voire identique, à celle de la chambre de détente 24 et des ouvertures amont 22₁ des deuxièmes canaux décrite ci-dessus.

Tous les canaux s'étendent sensiblement selon l'axe X.

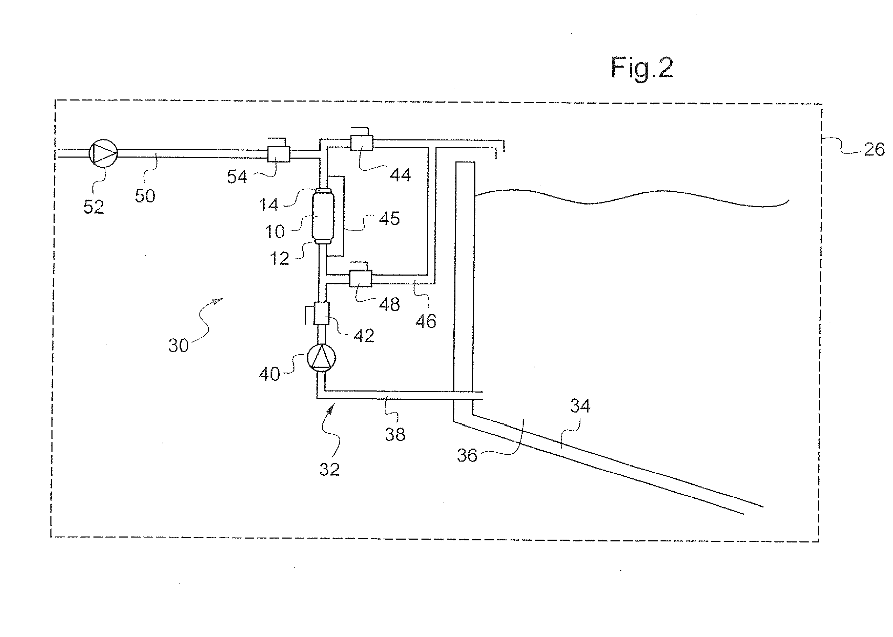

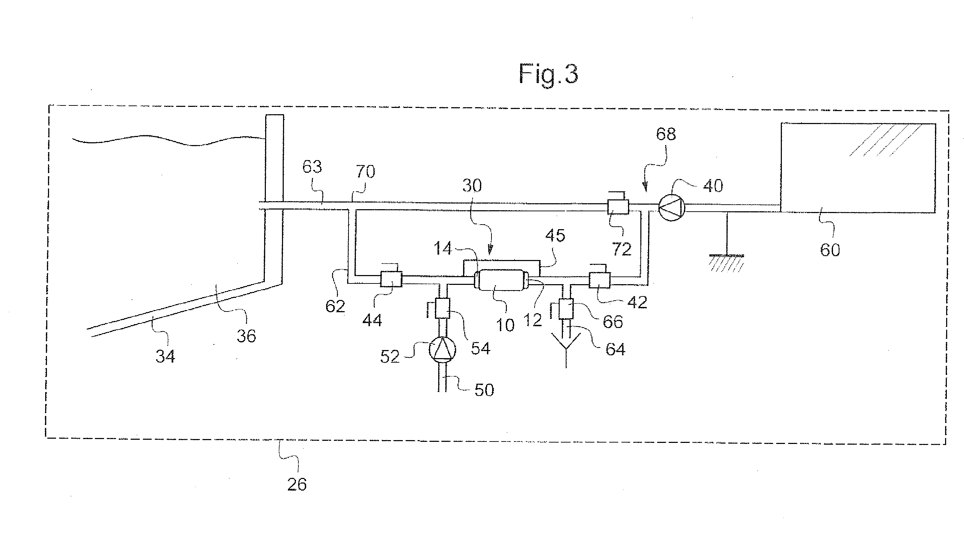

Comme représenté sur les figures 2 et 3, le réacteur 10 peut être inséré dans un circuit de traitement de boue activée d'une station d'épuration 26.

Dans le mode de réalisation de la figure 2, le circuit de traitement 30 comporte une boucle de recirculation 32 permettant d'extraire d'un bassin de boue activée 34 une boue activée 36, de la traiter au moyen du réacteur 10 et puis de la réinjecter dans le bassin de boue activée 34. La boucle de recirculation 32 comporte, insérés dans un conduit 38, successivement une pompe 40, une vanne 42, un réacteur 10 et une vanne 44. La boucle de recirculation 32 comporte également un conduit de contournement 46 du réacteur 10, pourvu d'une vanne 48. Enfin, un conduit d'alimentation en eau claire 50, pourvu d'une pompe 52 et d'une vanne 54, est connecté sur le conduit 38 entre le réacteur 10 et la vanne 44.

Le mode de réalisation de la figure 3 représente un circuit de traitement 30 connectant en amont un bassin de décantation 60 à un bassin de boue activée 34. Un câble équipotentiel 45 connecte électriquement l'entrée et la sortie du réacteur 10.

Ce circuit comporte un conduit 62 en communication de fluide en amont avec le bassin de décantation 60 et en aval avec le bassin de boue activée 34. De préférence, comme représenté, le conduit 62 forme une boucle de dérivation connectée par des points de connexion 68 et 70 sur un conduit principal 63 préexistant.

Dans le conduit 62 sont insérés successivement une vanne 42, un réacteur 10 et une vanne 44. Un conduit d'alimentation en eau claire 50, pourvu d'une pompe 52 et d'une vanne 54, est connecté au conduit 62 entre le réacteur 10 et la vanne 44. Le conduit 62 est connecté électriquement à la terre. Enfin, un conduit d'évacuation de boue 64, dans lequel est insérée une vanne 66, est connecté au conduit 62 entre la vanne 42 et le réacteur 10.

Le conduit principal 63 est classiquement prévu afin de transférer des boues du bassin de décantation 60 vers le bassin de boue activée 34 sans passer par le réacteur 10. Dans le conduit principal 63 sont insérés successivement une pompe 40 de mise en circulation de la boue, et, entre les points de connexion 68 et 70 du conduit 62, une vanne 72.

Pour traiter la boue activée contenue dans le bassin de boue activée 34 avec la configuration de la figure 2, les vannes 42 et 44 sont ouvertes et les vannes 48 et 54 sont fermées. La pompe 40 est en marche et la pompe 52 est à l'arrêt. La boue activée est alors aspirée au moyen de la pompe 40 dans le bassin de boue activée 36, traitée dans le réacteur 10, puis renvoyée dans le bassin de la boue activée 36.

Pour que la destruction des bactéries filamenteuses soit très sélective, le traitement des boues est de préférence intermittent. Une recirculation permanente finirait en effet par appauvrir la masse bactérienne utile.

De préférence, la durée cumulée totale de traitement est supérieure à 1 heure et/ou inférieure à 10 heures, inférieure à 8 heures, inférieure à 6 heures, voire inférieure à 4 heures par jour. De préférence, la durée totale de traitement est répartie en moins de 5, moins de 4, voire moins de 3 phases de traitement par jour, les phases de traitement étant de préférence d'une durée identique. Deux phases de traitement de 2 heures par jour sont bien adaptées.

De préférence, un suivi de la population des bactéries filamenteuses est effectué afin d'optimiser la chronologie des phases de traitement.

Pour nettoyer le réacteur 10 (mode « rétro-lavage »), les vannes 42 et 44 sont fermées, les vannes 48 et 54 ouvertes, la pompe 40 arrêtée et la pompe 52 mise en marche. De l'eau claire est alors aspirée par la pompe 52 et envoyée vers la sortie 14 du réacteur 10. Elle traverse les canaux de ce réacteur dans le sens inverse de celui de la boue activée, puis est renvoyée, *via* le conduit 46, vers le bassin de boue activée.

En cas de fonctionnement intermittent, on procède de préférence à un rétro-lavage après chaque phase de traitement afin d'éviter tout colmatage du réacteur 10 par stagnation des boues. De préférence, le rétro-lavage s'effectue à une pression supérieure à 2 bar, supérieure à 4 bar, et/ou inférieure à 10 bar, inférieure à 8 bar, voire inférieure à 6 bar.

Dans le mode de réalisation de la figure 3, de la boue activée provenant du bassin de décantation 60 peut être traitée par le réacteur 10. A cet effet, les vannes 42 et 44 sont ouvertes, les vannes 54, 66 et 72 sont fermées, la pompe 40 est en marche et la pompe 52 est à l'arrêt.

En mode rétro-lavage, les vannes 42 et 44 sont fermées, les vannes 54 et 66 ouvertes, la pompe 40 à l'arrêt et la pompe 52 en marche.

Enfin, pour évacuer de la boue activée provenant du bassin de décantation 60, les vannes 42 et 66 sont ouvertes, les vannes 44 et 54 sont fermées, la pompe 52 est à l'arrêt et la pompe 40 est en marche.

En dehors des phases de traitement, la vanne 72 est ouverte et les vannes 42 et 44 sont fermées. La mise en marche de la pompe 40 permet classiquement un transfert de boue activée depuis le bassin de décantation 60 vers le bassin de boue activée 34.

Un dispositif de commande, non représenté, est de préférence prévu pour commander les différentes vannes et pompes, comme décrit ci-dessus.

Dans les modes de réalisation des figures 2 et 3, la boue à traiter pénètre dans le réacteur 10 par l'entrée 12 (flèche F représentée sur la figure 1) et la première chambre de cisaillement 23. L'entrée dans les premiers canaux s'accompagne d'une accélération brutale de la boue activée et d'un cisaillement favorisant la rupture des bactéries filamenteuses.

La boue activée transite alors par les premiers canaux 20 ménagés dans le premier bloc 16 en un matériau diélectrique. Dans ces premiers canaux, la boue est soumise à un champ électrostatique qui conduit à la coagulation des matières en suspension, et en particulier des bactéries filamenteuses.

La boue débouche alors dans la première chambre de détente 24 dans des conditions favorisant la turbulence et le cisaillement. L'entrée dans la première chambre de détente 24 conduit à une chute brutale de la pression et à des phénomènes de cavitation particulièrement efficaces pour rompre les bactéries filamenteuses. La forme des ouvertures « aval » des premiers canaux 20 débouchant dans la première chambre de détente 24 peut être adaptée afin de maximiser la turbulence et les modifications de pression, par exemple en y ménageant des obstacles. De même, la texture de la surface intérieure des premiers canaux 20 peut être adaptée pour augmenter la turbulence.

Les conditions régnant dans la première chambre de détente 24 contribuent également à la coagulation en assurant un brassage élevé. Il est donc particulièrement avantageux que la première chambre de détente soit en aval des premiers canaux initiant la coagulation.

Les conditions opératoires (débit, pression) sont de préférence déterminées pour que la détente provoque de la cavitation. Avec un réacteur IONSCALE BUSTER®, la vitesse de la boue en entrée du réacteur est de préférence supérieure à 2 m/s et/ou inférieure à 15/ms, inférieure à 12 m/s, inférieure à 10 m/s, inférieure à 8 m/s, voire inférieure à 6 m/s, et la pression en entrée du réacteur est de préférence supérieure à 1 bar et/ou inférieure à 20 bar.

La première chambre de détente 24 sépare les ouvertures « aval » des premiers canaux des ouvertures « amont » des deuxièmes canaux.

La boue activée sortant de la première chambre de détente 24 pénètre ainsi directement dans les deuxièmes canaux 22 du deuxième bloc 18. Les deuxièmes canaux ne sont cependant pas alignés axialement avec les premiers canaux afin de favoriser la turbulence.

La présence du deuxième bloc 18 favorise la nucléation et la décantation ultérieure.

La pénétration de la boue activée dans les deuxièmes canaux 22 conduit à une accélération brutale de sa vitesse. La région de transition entre la chambre de détente 24 et les deuxièmes canaux 22 constitue donc une région d'accélération du flux. Cette accélération brutale conduit une partie des bactéries filamenteuses à être coupées par cisaillement, en particulier au contact des bords des ouvertures amont 22₁, des deuxièmes canaux 22. La première chambre de détente 24 agit ainsi comme chambre de cisaillement.

A la sortie du deuxième bloc 18, la boue poursuit son trajet vers le bassin de boue activée.

Comme cela apparaît clairement à présent, l'invention fournit une solution permettant de détruire sélectivement les bactéries filamenteuses tout en préservant l'équilibre biologique du bassin de boue activée.

Bien entendu, la présente invention n'est cependant pas limitée aux modes de réalisation décrits et représentés. En particulier, elle s'étend procédé selon la revendication 10.

En outre, le nombre ou la forme des premiers canaux peuvent être différents de ceux des deuxièmes canaux.

Le nombre de premiers blocs peut être identique ou différent du nombre de deuxièmes blocs.

Les premiers blocs ne sont pas nécessairement disposés en alternance avec les deuxièmes blocs le long de l'axe du réacteur.

Des blocs successifs le long de l'axe du réacteur ne sont pas nécessairement séparés par une chambre de détente, même si cette caractéristique est préférable.

Par exemple, deux premiers blocs peuvent être adjacents ou séparés par une chambre de détente.

Le nombre et la forme des chambres de détente peuvent être divers. En particulier une chambre de détente peut être prévue en aval du bloc le plus en aval du réacteur.

La chambre de détente peut recevoir de la boue d'autres canaux que des premiers canaux, par exemple de deuxièmes canaux.

Le nombre de réacteurs dans le circuit de traitement n'est pas limitatif. En particulier, dans un mode de réalisation, le circuit de traitement comporte deux réacteurs en parallèle et des vannes permettant à la boue activée de traverser sélectivement seulement le premier réacteur, seulement le deuxième réacteur ou les deux réacteurs. La maintenance de la station d'épuration en est simplifiée.

La taille de la station d'épuration n'est pas non plus limitative. La station d'épuration peut en particulier être une station d'épuration urbaine, par exemple adaptée pour le traitement des eaux usées d'une population supérieure à 20 000, supérieure à 50 000, supérieure à 100 000, supérieure à 200 000, voire supérieure à 300 000 habitants.

Un réacteur peut en particulier être dimensionné pour le traitement de plus de 20, plus de 40, voire plus de 60 m³ par heure.

## Revendications

1. Station d'épuration à boue activée (26) comportant un circuit de traitement (30) pourvu d'un réacteur (10) dans lequel de la boue activée comportant des bactéries filamenteuses traverse une pluralité de premiers canaux (20) délimités par une paroi intérieure en un matériau diélectrique et au moins une chambre de détente (24), le diamètre intérieur équivalent des premiers canaux étant supérieur à 2 mm et inférieur à 50 mm, et les premiers canaux débouchant, vers l'aval, dans ladite chambre de détente, ledit circuit de traitement étant configuré pour générer de la cavitation dans la chambre de détente.

2. Station d'épuration selon la revendication précédente, dans laquelle ledit matériau diélectrique est choisi parmi du polytétrafluoroéthylène, du nylon, du polyprapylène, du polychlorure de vinyle, ou un mélange de ces matériaux.

3. Station d'épuration selon l'une quelconque des revendications précédentes, dans laquelle le réacteur comporte des canaux d'alimentation en boue de la chambre de détente, le rapport S / ∑ étant supérieur à 10 et inférieur à 1000,
- S désignant la section de la chambre de détente (24) mesurée dans un plan transversal immédiatement en aval de la région dans laquelle les canaux d'alimentation en boue (20) débouchent dans la chambre de détente ;
- ∑ désignant la somme des sections transversales desdits canaux d'alimentation mesurées dans un plan transversal immédiatement en amont de la région dans laquelle ils débouchent dans la chambre de détente.

4. Station d'épuration selon l'une quelconque des revendications précédentes, le nombre de premiers canaux étant supérieur à 3 et inférieur à 100.

5. Station d'épuration selon l'une quelconque des revendications précédentes, dans laquelle les premiers canaux sont rectilignes, parallèles les uns aux autres, et présentent une longueur comprise entre 20 et 40 mm et une section transversale sensiblement constante sur toute leur longueur, le diamètre intérieur équivalent desdits premiers canaux étant compris entre 2 et 15 mm.

6. Station d'épuration selon l'une quelconque des revendications précédentes, dans laquelle le réacteur comporte une pluralité de deuxièmes canaux débouchant dans ladite chambre de détente et délimités par une paroi intérieure en un matériau conducteur électriquement apte à servir d'anode sacrificielle.

7. Station d'épuration selon la revendication précédente, dans laquelle les premiers canaux débouchent dans ladite chambre de détente sans être en regard de deuxièmes canaux.

8. Station d'épuration selon l'une quelconque des revendications précédentes, comportant une pompe (40) disposée de manière à générer, lors de son fonctionnement, un écoulement de boue activée à travers le réacteur, et un dispositif de commande programmé pour faire fonctionner ladite pompe par intermittence.

9. Station d'épuration selon l'une quelconque des revendications précédentes, comportant au moins une chambre de cisaillement en aval de laquelle la vitesse de la boue activée augmente par pénétration dans des canaux d'évacuation.

10. Procédé de destruction de bactéries filamenteuses contenues dans un liquide, consistant à faire passer ledit liquide à travers un réacteur conforme à celui mis en oeuvre dans une station d'épuration selon l'une quelconque des revendications précédentes.

## Patentansprüche

1. Station zur Reinigung mit Belebtschlamm, die aufweist, einen Behandlungskreislauf (30), der mit einem Reaktor (10) versehen ist, in welchem der Belebtschlamm, der fadenförmige Bakterien aufweist, mehrere erste Kanäle (20) durchdringt, die durch eine innere Wand aus einem dielektrischen Material und zumindest eine Kammer zum Entspannen (24) begrenzt sind, wobei der innere äquivalente Durchmesser der ersten Kanäle mehr als 2 mm und weniger als 50 mm beträgt, und die ersten Kanäle über die Unterstützung in die besagte Kammer zum Entspannen münden, wobei der Behandlungskreislauf ausgebildet ist, um Kavitation in der Kammer zum Entspannen zu erzeugen.

2. Station zur Reinigung nach dem voranstehenden Anspruch, in welcher das dielektrische Material ausgewählt ist unter dem Polytetrafluorethylen, dem Nylon, dem Polypropylen, dem Polyvinylchlorid oder einer Mischung von diesen Materialien.

3. Station zur Reinigung nach irgendeinem der voranstehenden Ansprüche, in welcher der Reaktor aufweist Versorgungskanäle im Schlamm der Kammer zum Entspannen, wobei das Verhältnis S/Σ mehr als 10 und weniger als 1000 beträgt, wobei
- S den Querschnitt der Kammer des Entspannens (24) darstellt, gemessen in einer Ebene transversal unmittelbar an der Unterstützung von dem Bereich in welchen die Versorgungskanäle im Schlamm (20) in die Kammer zum Verweilen münden;
- Σ die Summe der transversalen Abschnitte der Versorgungskanäle gemessen in einer Ebene transversal unmittelbar stromaufwärts von dem Bereich bezeichnet, in welchen sie in die Kammer zum Entspannen münden.

4. Station zur Reinigung nach irgendeinem der voranstehenden Ansprüche, wobei die Anzahl der ersten Kanäle mehr als 3 und weniger als 100 beträgt.

5. Station zur Reinigung nach irgendeinem der voranstehenden Ansprüche, in welcher die ersten Kanäle gradlinig parallel zueinander sind und eine Länge darstellen, die zwischen 20 und 40 mm enthalten ist, und einen genau konstant transversalen Abschnitt über ihre gesamte Länge vorzugeben, wobei der innere äquivalente Durchmesser der ersten Kanäle zwischen 2 und 15 mm umfasst wird.

6. Station zur Reinigung nach irgendeinem der voranstehenden Ansprüche, in welcher der Reaktor mehrere zweite Kanäle aufweist, die in die Kammer zum Entspannen münden, und durch eine innere Wand aus einem elektrisch leitenden Material begrenzt sind, das bestimmt ist, um als Opferanode zu dienen.

7. Station zur Reinigung nach dem voranstehenden Anspruch, in welcher die ersten Kanäle in die Kammer zum Entspannen münden, ohne in Verbindung mit den zweiten Kanälen zu sein.

8. Station zur Reinigung nach irgendeinem der voranstehenden Ansprüche, die eine Pumpe (40), die in einer Weise angeordnet ist, um während deren Funktion ein Fließen des Belebtschlammes durch den Reaktor zu erzeugen, und eine Befehlseinrichtung aufweist, die programmiert ist, um die Pumpe intermittierend arbeiten zu lassen.

9. Station zur Reinigung nach irgendeinem der voranstehenden Ansprüche, die zumindest eine Scherkammer aufweist, durch deren Unterstützung die Geschwindigkeit des Belebtschlammes durch Penetration in Absaugkanälen ansteigt.

10. Verfahren zum Abbau von fadenförmigen Bakterien, die in einer Flüssigkeit enthalten sind, daraus bestehend, dass eine Flüssigkeit dazu gebracht wird, einen Reaktor zu durchqueren, der mit dem übereinstimmt, der in einer Station zur Reinigung nach irgendeinem der voranstehenden Ansprüche eingesetzt wird.

## Claims

1. Activated sludge treatment plant (26) comprising a processing circuit (30) provided with a reactor (10), in which the activated sludge comprising filamentous bacteria goes through a plurality of first channels (20) delimited by an internal wall in a dielectric material and at least one expansion chamber (24), the equivalent internal diameter of the first channels being more than 2 mm and less than 50 mm and the first channels coming out downstream in this expansion chamber, this processing circuit being configured to produce cavitation in the expansion chamber.

2. Treatment plant according to the previous claim, in which this dielectric material is selected from polytetrafluoroethylene, nylon, polypropylene, polyvinyl chloride or a mixture of these materials.

3. Treatment plant according to any one of the previous claims, in which the reactor comprises channels for supplying the expansion chamber with sludge, the S / ∑ ratio being more than 10 and less than 1000,
- S indicating the section of the expansion chamber (24) measured in a transverse plane immediately downstream of the area where the channels supplying the sludge (20) come out in the expansion chamber;
- ∑ indicating the total of the transverse sections of these supply channels measured in a transverse plane immediately upstream of the area where they come out in the expansion chamber.

4. Treatment plant according to any one of the previous claims, the number of first channels being more than 3 and less than 100.

5. Treatment plant according to any one of the previous claims, in which the first channels are straight, parallel to each other and have a length of between 20 and 40 mm and a transverse section that is more or less constant over their whole length, the equivalent internal diameter of these first channels being between 2 and 15 mm.

6. Treatment plant according to any one of the previous claims, in which the reactor comprises a plurality of second channels coming out in this expansion chamber and delimited by a single internal wall in an electrically conductive material that is suitable for use as a sacrificial anode.

7. Treatment plant according to the previous claim, in which the first channels come out in this expansion chamber without facing second channels.

8. Treatment plant according to any one of the previous claims, comprising a pump (40) arranged in such a way as to produce a flow of activated sludge through the reactor, when it is operating, and a control device programmed to make this pump operate intermittently.

9. Treatment plant according to any one of the previous claims, comprising at least one shear chamber, downstream of which the speed of the activated sludge increases by entering the drainage channels.

10. Method for destroying filamentous bacteria contained in a liquid consisting of having this liquid pass through a reactor in accordance with the one put into operation in a treatment plant according to any one of the previous claims.
